# EUROPEAN PATENT SPECIFICATION

(11) **EP 3 298 315 B1**
(45) Date of publication and mention of the grant of the patent: **29.04.2020**
(21) Application number: 16796817.1
(22) Date of filing: 19.05.2016
(51) Int. Cl.: F16L 19/02, F16L 19/00, F16L 41/14

(54) **SEAL AND PIPE CARRIER UNIT FOR A SUBSEA PIPE CONNECTION**
DICHTUNGS- UND ROHRTRÄGEREINHEIT FÜR EINE UNTERWASSERROHRVERBINDUNG
UNITÉ DE SUPPORT DE JOINT ET DE TUYAUX POUR RACCORDEMENT DE TUYAUX SOUS-MARINS

(30) Priority: 20.05.2015 NO 20150628; 18.05.2016 NO 20160834
(43) Date of publication of application: 28.03.2018
(73) Proprietor: Hellenes Subsea AS, 6802 Førde (NO)
(72) Inventor: ERIKSEN, Egil, 3570 Ål (NO)
(74) Representative: Håmsø Patentbyrå AS
(86) International application number: PCT/NO2016/050094
(87) International publication number: WO 2016/186514

(56) References cited:
- WO-A2-2009/094245
- DE-A1- 10 065 654
- FR-A- 1 434 397
- GB-A- 349 711
- GB-A- 588 902
- GB-A- 836 825
- GB-A- 2 010 428
- GB-A- 2 172 072
- JP-A- H08 100 875
- KR-A- 20150 026 660
- US-A- 4 364 517
- US-A- 4 364 517
- US-A- 5 145 219
- US-A- 5 782 500
- US-A1- 2009 026 716

## Description

The invention relates to a pipe connection for sealingly connecting a first pipe and a second pipe which are provided, at their opposite end portions, with removable rings arranged in grooves provided in the peripheries of the pipes, the pipe connection being provided with a first nut which is provided with an internally threaded portion, is arranged to encircle the end portion of the first pipe and is provided with a shoulder portion which may abut in an axially supporting manner against said ring, and a second nut which is provided with an externally threaded portion, is arranged to encircle the end portion of the second pipe and is provided with a shoulder portion which may abut in an axially supporting manner against said ring, the nuts being in threaded engagement with each other and being arranged to press radial pipe-end faces of the pipes against an axially supporting portion of a seal and pipe carrier unit which is enclosed by the nuts.

The invention also relates to a pipe connection for sealingly connecting a machined block and a pipe which is provided, at its end portion, with a removable ring arranged in a groove provided in the periphery of the pipe, the pipe connection being provided with a nut which is provided with an internally threaded portion, is arranged to encircle the end portion of the pipe and is provided with a shoulder portion which may abut in an axially supporting manner against said ring, and a connecting socket which is fixed to said block and projects from a seal face encircling a port, is provided with an externally threaded portion and is arranged to encircle the end portion of the pipe, the nut and the connecting socket being in threaded engagement with each other and surrounding a seal and pipe carrier unit and being arranged to press a radial pipe-end face of the pipe against an axially supporting portion of the seal and pipe carrier unit and an end face of the seal and pipe carrier unit against said seal face.

Finally, the invention relates to a method of sealingly connecting a first pipe and a second pipe or a machined block and a pipe by means of a pipe connection.

For underwater use, there are requirements for double sealing and sealing against both external and internal pressures. A high standard of straightness is required in the assembly of flanges and pipes in such situations.

Welding high-pressure pipes in materials such as super duplex steel is demanding and, in many applications, weld-free connections are to be preferred for thick-walled pipes with high working pressure, in which the pipe connection is under load and may be subjected to pressure pulses and vibration.

Using flange joints in which a rotatable flange has been fitted to a pipe end and mounts a pipe to an opposite flange or to a machined block is prior art. An advantage in relation to all-welded structures is that the components can be disassembled. The flange rests against a locking ring, which lies in a machined groove on the pipe end, and when the flanges are made up, the pipe end is pressed against a seal element. Connecting flanges with bolts requires a high standard of correct assembly in order to get a straight connection and, normally, only certified personnel are allowed to make up the connection. WO 2009/144359 A1 discloses a high-pressure flange solution.

US 4927192 A shows a pipe connector with internally and externally threaded nuts that are in engagement with each other, each nut abutting against a ring which is placed in a groove on the end of each one of two pipes that are to be connected to each other. When being tightened, the pipe ends are brought towards each other and pressed against a seal element between the pipe ends. US 4364517 A discloses a connector between a pipe and a block with an outer locking nut. WO0017548 A1 shows a connector with a locking nut and a seal- and pipe-holder.

EP0231076 A1 discloses the use of a setscrew to lock the nut and sleeve in a pipe connector.

FR1434397 discloses a connection between pipe sections comprising a female nut, a male nut and a connecting sleeve arranged within the nuts. Facing extremities of the pipe sections are joined by the connecting sleeve.

The invention has for its object to remedy or reduce at least one of the drawbacks of the prior art or at least provide a useful alternative to the prior art.

The object is achieved through the invention which is defined by a pipe coupling according to claim 1 or 2 and a method according to claim 7. Further preferred embodiments are defined in the dependent claims.

A pipe connection provided with a seal and pipe carrier unit, often referred to as a "seal carrier", is provided, which, by means of primary and secondary seals, ensures double sealing of the pipe connection, that is to say prevents leakage at both internal and external positive pressures, and ensures the axial orientation and precise guidance of the pipe ends during make-up. The seals are arranged between pipe-end faces and an axially supporting portion of the seal and pipe carrier unit, and between the pipe periphery and a surrounding sleeve-shaped portion of the seal and pipe carrier unit, alternatively between a pipe-end face and an axially supporting portion of the seal and pipe carrier unit, between the pipe periphery and a surrounding sleeve-shaped portion of the seal and pipe carrier unit and between an end face of the seal and pipe carrier unit and a seal face encircling a port on a machined block, for example a valve housing.

The invention is defined by the independent claims. The dependent claims define advantageous embodiments of the invention.

In a first aspect, the invention relates more specifically to a pipe connection for sealingly connecting a first pipe and a second pipe which are provided, at their opposite end portions, with removable rings arranged in grooves provided in the peripheries of the pipes, the pipe connection being provided with
a first nut which is provided with an internally threaded portion, is arranged to encircle the end portion of the first pipe and is provided with a shoulder portion which may abut in an axially supporting manner against said ring, and
a second nut which is provided with an externally threaded portion, is arranged to encircle the end portion of the second pipe and is provided with a shoulder portion which may abut in an axially supporting manner against said ring,
the nuts being in threaded engagement with each other and being arranged to press radial pipe-end faces of the pipes against an axially supporting portion of a seal and pipe carrier unit enclosed by the nuts, characterized by
the axially supporting portion being provided with parallel abutment faces projecting radially inwards, which are each provided with a primary-seal groove provided with a primary seal arranged to sealingly abut against said pipe-end faces, and
there being, extending axially in both directions from the axially supporting portion, sleeve-shaped radially supporting portions which are provided, internally, with respective secondary-seal grooves with secondary seals arranged to abut sealingly against the peripheries of the pipes.

In a second aspect, the invention relates more specifically to a pipe connection for sealingly connecting a machined block and a pipe which is provided, in its end portion, with a removable ring arranged in a groove provided in the periphery of the pipe, the pipe connection being provided with
a nut which is provided with an internally threaded portion, is arranged to encircle the end portion of the pipe and is provided with a shoulder portion which may abut in an axially supporting manner against said ring, and
a connecting socket which is fixed to said block and projects from a seal face encircling a port, is provided with an externally threaded portion and is arranged to encircle the end portion of the pipe,
the nut and the connecting socket being in threaded engagement with each other and surrounding a seal and pipe carrier unit and being arranged to press a radial pipe-end face of the pipe against an axially supporting portion of the seal and pipe carrier unit and an end face of the seal and pipe carrier unit against said seal face, characterized by
the axially supporting portion being provided with an abutment face projecting radially inwards, which is parallel to said end face and which is provided with a primary-seal groove provided with a primary seal arranged to abut sealingly against said pipe-end face or against said seal face, and
there being, extending axially from the axially supporting portion, a sleeve-shaped radially supporting portion which is provided, internally, with a first secondary-seal groove provided with a secondary seal arranged to abut sealingly against the periphery of the pipe, and
said end face being provided with a second secondary-seal groove encircling the primary-seal groove of the end face and being provided with a secondary seal arranged to sealingly abut against said seal face.

The primary seal may be a metal seal.

The secondary seal may be an elastomeric seal. Alternatively, the secondary seal may be an elastomeric seal provided with at least one removable supporting ring.

The nut that is provided with an internally threaded portion may be provided with at least one threaded radial bore arranged to receive a setscrew for locking the nut relative to the corresponding threaded portion.

In a third aspect, the invention relates more specifically to a method of sealingly connecting a first pipe and a second pipe or a machined block and a pipe by means of a pipe connection as described above, characterized by the method including the steps:
- placing a seal and pipe carrier unit with associated primary and secondary seals between pipe-end faces of adjacent pipes, possibly between the pipe-end face of a pipe and a seal face encircling a port on an adjacent block;
- connecting a nut to a corresponding threaded portion in the pipe connection;
- pulling the pipe connection together by means of the nut in order thereby to bring said seals into sealing abutment against the pipe-end faces of the pipes, or against the pipe-end face of the pipe and the seal face.

The method may include the further step:
- locking the nut to the corresponding threaded portion with at least one setscrew which is arranged in a threaded radial bore in the nut.

In what follows, an example of a preferred embodiment and method is described, which is visualized in the accompanying drawings, in which:
- Figure 1: shows a perspective sketch of a connection between two pipes formed of a pipe connection comprising a seal and pipe carrier unit according to the invention;
- Figure 2: shows an axial section of the pipe connection according to figure 1;
- Figure 3: shows a perspective sketch of a nut with threaded holes for radially positioned setscrews;
- Figure 4: shows a perspective sketch of a connection between a pipe and a machined block formed of a pipe connection comprising a seal and pipe carrier unit according to the invention; and
- Figure 5: shows an axial section of the pipe connection according to figure 4.

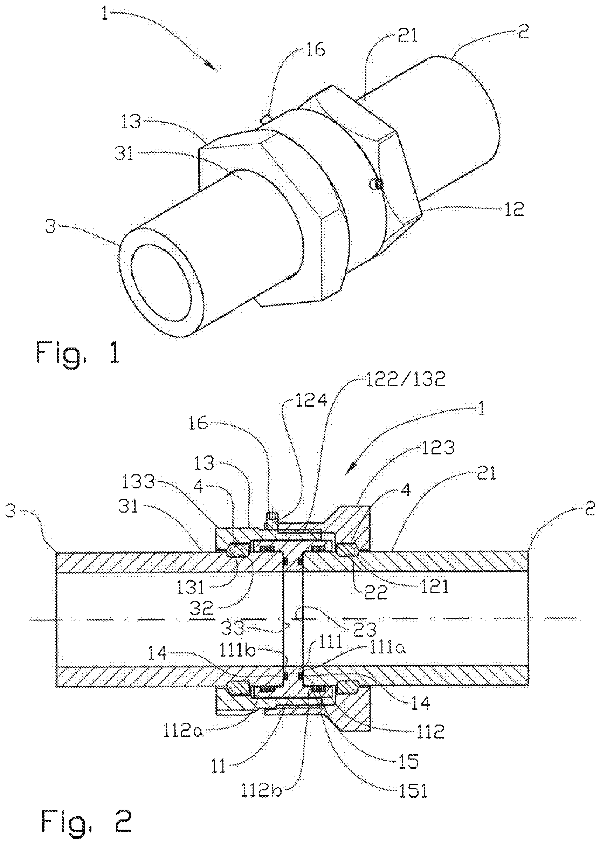

Reference is first made to figures 1 and 2, in which the reference numeral 1 indicates a pipe connection for sealingly connecting first and second pipes 2, 3. The pipe connection 1 is provided with a first nut 12 with an internally threaded portion 122, and a second nut 13 with an externally threaded portion 132.

Said nuts 12, 13 have been passed over respective pipes 2 and 3, and are abutting with their shoulder portions 121 and 131, respectively, against respective removable rings 4 which are fitted in machined grooves 22 and 32, respectively, in end portions 21 and 32, respectively, on the pipes 2, 3. The nuts 12, 13 are in threaded engagement with each other.

In the pipe connection 1 for connecting two pipes 2, 3, a seal and pipe carrier unit 11 is positioned, encircled by the nuts 12, 13. A middle portion forms an axially supporting portion 111 with parallel abutment faces 11a projecting radially inwards, each provided with a primary-seal groove 111b. Extending axially in both directions from the middle portion, there are sleeve-shaped radially supporting portions 112, 112a, which are each provided, internally, with a secondary-seal groove 112b.

The primary-seal groove 111b of the seal and pipe carrier unit 11 is arranged to receive a primary seal 14, typically in the form of a metal seal, arranged to abut against a pipe-end face 23, 33 of the adjacent pipe 2, 3.

The secondary-seal groove 112b of the seal and pipe carrier unit 11 is arranged to receive a secondary seal 15, typically in the form of an elastomeric seal, shown here with associated supporting rings 151, arranged to abut against the periphery of the surrounded pipe 2, 3.

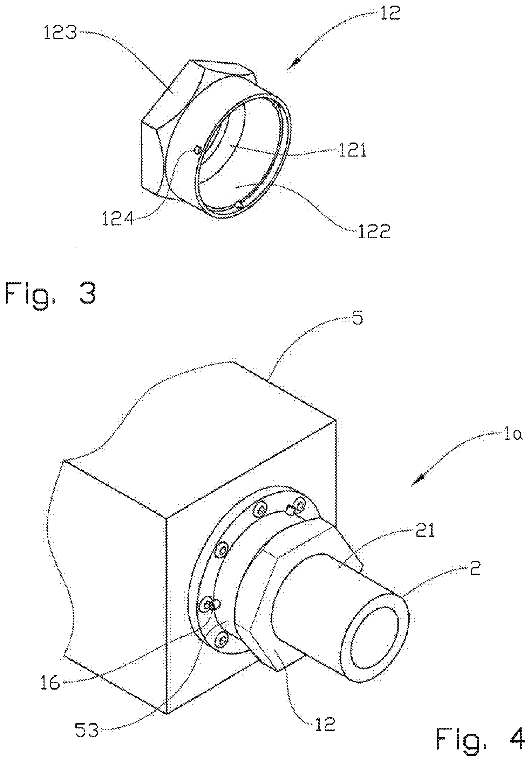

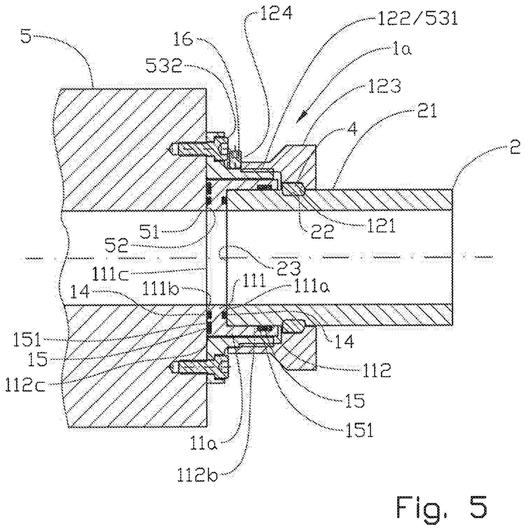

As appears from figures 4 and 5, a variant 1a of the pipe connection may be used to fix a pipe 2 to a machined block 5, for example a valve housing or a pump housing, by a nut 12, which abuts in an axially supporting manner against the removable ring 4 of the pipe 2, having been screwed in over a connecting socket 53 with an externally threaded portion 531 projecting from a seal face 52 surrounding a port 51 which communicates with a fluid passage in the block 5. Here, the connecting socket 53 is shown attached to the block 5 by means of several fixing screws 532.

In the pipe connection 1a for the connection of the pipe 2 and the machined block 5, a seal and pipe carrier unit 11a is positioned, encircled by the nut 12 and the connecting socket 53. From an end portion forming an axially supporting portion 111, a sleeve-shaped radially supporting portion 112 extends axially, provided, internally, with a secondary-seal groove 112b. An end portion forms an axially supporting portion 111 with an abutment face 111a projecting radially inwards and being parallel to an end face 111c. Each of the abutment face 111a and the end face 111c is provided with a primary-seal groove 111b. On the end face 111c, a second secondary-seal groove 112c has been arranged as well, encircling the primary-seal groove 111b of the end face 111c.

The primary-seal grooves 111b of the seal and pipe carrier unit 11a are arranged to receive primary seals 14, typically in the form of metal seals, arranged to abut against the pipe-end face 23 of the adjacent pipe 2 and against the seal face 52 of the machined block 5, respectively.

The secondary-seal grooves 112b of the seal and pipe carrier unit 11 are arranged to receive secondary seals 15, typically in the form of elastomeric seals, shown here with associated supporting rings 151, arranged to abut against the periphery of the surrounded pipe 2 and against the seal face 52 of the machined block 5.

The pipe connection 1 is pulled together by the first nut 12 and the second nut 13 being screwed together and tightened to a moment, such that the primary seals 14 are sealing against internal positive pressure in the pipes 2, 3. Correspondingly, the nut 12 is screwed in over the externally threaded connecting socket 53 when the pipe 2 is being fitted to the machined block 5, as is shown in figure 5.

After the pipe connection 1, 1a has been made up to the desired moment, setscrews 16 may be screwed into threaded radial bores 124 in the (first) nut 12, as shown in figures 1, 2, 4 and 5, so that the set screws 16 are pressing against the second nut 13 or the connecting socket 53, securing the (first) nut 12.

It should be noted that all the above-mentioned embodiments illustrate the invention, but do not limit it, and persons skilled in the art will be able to construct many alternative embodiments without departing from the scope of the attached claims. In the claims, reference numbers in parentheses are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A pipe connection (1) for sealingly connecting first and second pipes (2, 3) which, at their opposite end portions (21, 31), are provided with removable rings (4) arranged in grooves (22, 32) provided in the peripheries of the pipes (2, 3), the pipe connection (1) being provided with
a first nut (12) which is provided with an internally threaded portion (122), is arranged to encircle the end portion (21) of the first pipe (2) and is provided with a shoulder portion (121) which may abut in an axially supporting manner against said ring (4),
a second nut (13) which is provided with an externally threaded portion (132), is arranged to encircle the end portion (31) of the second pipe (3) and is provided with a shoulder portion (131) which may abut in an axially supporting manner against said ring (4), and
a seal and pipe carrier unit (11) enclosed by the nuts (12,13),
the nuts (12, 13) being in threaded engagement with each other and being arranged to press radial pipe-end faces (23, 33) of the pipes (2, 3) against an axially supporting portion (111) of the seal and pipe carrier unit (11),
wherein
the axially supporting portion (111) is provided with parallel abutment faces (111a) projecting radially inwards, which are each provided with a primary-seal groove (111b) provided with a primary seal (14) arranged to sealingly abut against said pipe-end faces (23, 33), and,
extending axially in both directions from the axially supporting portion (111), there are sleeve-shaped, radially supporting portions (112, 112a) which are provided, internally, with respective secondary-seal grooves (112b) provided with secondary seals (15) arranged to sealingly abut against the peripheries of the pipes (2, 3).

2. A pipe connection (1a) for sealingly connecting a machined block (5) and a pipe (2) which is provided, in its end portion (21), with a removable ring (4) arranged in a groove (22) provided in the periphery of the pipe (2), the pipe connection (1a) being provided with
a nut (12) which is provided with an internally threaded portion (122), is arranged to encircle the end portion (21) of the pipe (2) and is provided with a shoulder portion (121) which may abut in an axially supporting manner against said ring (4),
a connecting socket (53) which is configured to be fixed to said block (5) onto a seal face (52) encircling a port (51) of said block (5), wherein the connecting socket (53) is provided with an externally threaded portion (531) and is arranged to encircle the end portion (21) of the pipe (2), and
a seal and pipe carrier unit (11a),
the nut (2) and the connecting socket (53) being in threaded engagement with each other and enclosing the seal and pipe carrier unit (11a) and being arranged to press
a radial pipe-end face (23) of the pipe (2) against an axially supporting portion (111) of the seal and pipe carrier unit (11a) and an end face (111c) of the seal and pipe carrier unit (11a) against said seal face (52),
wherein
the axially supporting portion (111) is provided with an abutment face (111a) projecting radially inwards and being parallel to said end face (111c), and each of the end face (111c) and the abutment face (111a) is provided with a primary-seal groove (111b) provided with a primary seal (14) arranged to abut sealingly against said pipe-end face (23) and against said seal face (52), respectively, and,
extending axially from the axially supporting portion (111), there is a sleeve-shaped radially supporting portion (112) which is provided, internally, with a first secondary-seal groove (112b) provided with a secondary seal (15) arranged to abut sealingly against the periphery of the pipe (2), and
said end face (111c) is provided with a second secondary-seal groove (112c) encircling the primary-seal groove (111b) of the end face (111c) and being provided with a secondary seal (15) arranged to sealingly abut against said seal face (52).

3. The pipe connection (1, 1a) according to claim 1 or 2, wherein the primary seal (14) is a metal seal.

4. The pipe connection (1, 1a) according to claim 1 or 2, wherein the secondary seal (15) is an elastomeric seal.

5. The pipe connection (1, 1a) according to claim 1 or 2, wherein the secondary seal (15) is an elastomeric seal provided with at least one supporting ring (151).

6. The pipe connection (1, 1a) according to claim 1 or 2, wherein the (first) nut (12) is provided with at least one threaded radial bore (124) arranged to receive a set screw (16) for locking the nut (12) relative to the corresponding externally threaded portion (132, 531).

7. A method of sealingly connecting first and second pipes (2, 3) or a machined block (5) and a pipe (2) by means of a pipe connection (11a) according to claim 1 or 2, wherein the method comprises the steps:
- placing the seal and pipe carrier unit (11, 11a) with the associated primary and secondary seals (14, 15) between the pipe-end faces (23, 33) of the adjacent pipes (2, 3), or between the pipe-end face (23) of the pipe (2) and the seal face (52) encircling the port (51) of the adjacent block (5);
- connecting the first nut (12) to the corresponding externally threaded portion (132, 531) in the pipe connection (1, 1a);
- pulling the pipe connection (1, 1a) together by means of the first nut (12) in order thereby to bring said seals (14, 15) into sealing abutment against the pipe-end faces (23, 33) of the pipes (2, 3), or against the pipe-end face (23) of the pipe (2) and the seal face (52).

8. The method according to claim 7, wherein the method includes the further step:
- locking the nut (12) to the corresponding externally threaded portion (132, 531) with at least one set screw (16) which is arranged in a threaded radial bore in the nut (12).

## Patentansprüche

1. Rohrverbindung (1) zur abdichtenden Verbindung eines ersten und zweiten Rohres (2, 3), welche an ihren entgegengesetzten Endabschnitten (21, 31) ablösbare Ringe (4) aufweisen, welche in in den Peripherien der Rohre (2, 3) angeordneten Nuten (22, 32) angeordnet sind, wobei die Rohrverbindung aufweist:
- eine erste Mutter (12), welche einen internen Gewindeabschnitt (122) aufweist und welche derart angeordnet ist, dass sie den Endabschnitt (21) des ersten Rohres (2) umschliesst, und welche einen Schulterabschnitt (121) aufweist, welcher in einer axial stützenden Weise gegen den besagten Ring (4) anliegen kann,
- eine zweite Mutter (13), welche einen Aussengewindeabschnitt (132) aufweist und welche derart angeordnet ist, dass sie den Endabschnitt (31) des zweiten Rohres (3) umschliesst, und welche einen Schulterabschnitt (131) aufweist, welcher in einer axial stützenden Weise gegen den besagten Ring (4) anliegen kann, und
- eine Dichtungs- und Rohrträgereinheit (11), welche von den Muttern (12, 13) umschlossen wird,
- wobei die Muttern (12, 13) in einem Gewindeeingriff miteinander stehen und derart angeordnet sind, dass sie radiale Rohrendflächen (23, 33) der Rohre (2, 3) gegen einen axialen Stützabschnitt (111) der Dichtungs- und Rohrträgereinheit (11) drücken, wobei
- der axiale Stützabschnitt (111) parallele Anschlagsflächen (111a) aufweist, welche radial nach innen gerichtet sind, welche jeweils ausgestattet sind mit einer Primärdichtungsnut (111b), welche mit einer Primärdichtung (14) ausgestattet ist, welche derart angeordnet ist, dass sie in abdichtender Weise gegen die besagten Rohrendflächen (23, 33) anliegt, und
- wobei sich axial in beide Richtungen vom axialen Stützabschnitt (111) hülsenförmige, radiale Stützabschnitte (112, 112a) erstrecken, welche an ihrer Innenseite entsprechende Sekundärdichtungsnuten (112b) aufweisen, welche Sekundärdichtungen (15) aufweisen, welche derart angeordnet sind, dass sie in abdichtender Weise gegen die Peripherien der Rohre (2, 3) anliegen.

2. Rohrverbindung (1a) zur abdichtenden Verbindung eines maschinell bearbeiteten Blocks (5) und eines Rohrs (2), welches in seinem Endabschnitt (21) einen ablösbaren Ring (4) aufweist, welcher in einer in der Peripherie des Rohrs (2) angeordneten Nut (22) angeordnet ist, wobei die Rohrverbindung (1a) aufweist:
- eine Mutter (12), welche einen Innengewindeabschnitt (122) aufweist, und derart angeordnet ist, dass sie den Endabschnitt (21) des Rohrs (2) umschliesst und einen Schulterabschnitt (121) aufweist, welcher auf eine axiale stützende Weise gegen den besagten Ring (4) anliegen kann,
- einen Verbindungsstutzen (53), welcher ausgebildet ist, um an dem besagten Block (5) auf einer Dichtungsfläche (52), welche einen Anschluss (51) des besagten Blocks (5) umschliesst, fixiert zu werden, wobei der Verbindungsstutzen (53) einen Aussengewindeabschnitt (531) aufweist und derart angeordnet ist, dass er den Endabschnitt (21) des Rohrs (2) umschliesst, sowie eine Dichtungs- und Rohrträgereinheit (11a),
- wobei die Mutter (2) und der Verbindungsstutzen (53) in Gewindeeingriff miteinander stehen und die Dichtungs- und Rohrträgereinheit (11a) umschliessen, und derart angeordnet sind, dass sie eine radiale Rohrendfläche (23) des Rohrs (2) gegen einen axialen Stützabschnitt (111) der Dichtungs- und Rohrträgereinheit (11) drücken und eine Endfläche (111c) der Dichtungs- und Rohrträgereinheit (11a) gegen die besagte Dichtungsfläche (52),
wobei
- der axiale Stützabschnitt (111) eine Anschlagsfläche (111a) aufweist, welche radial nach innen gerichtet ist, und welche parallel zur besagten Endfläche (111c) angeordnet ist, und wobei jede der Endfläche (111c) und derAnschlagsfläche (111a) eine Primärdichtungsnut (111b) aufweist, welche mit einer Primärdichtung (14) ausgestattet ist, welche derart angeordnet ist, dass sie in abdichtender Weise gegen die besagte Rohrendfläche (23) und gegen die besagte Dichtungsfläche (52) anliegt, und
- wobei sich in axialer Richtung vom axialen Stützabschnitt (111) ein hülsenförmiger, radialer Stützabschnitt (112) erstreckt, welche an seiner Innenseite eine entsprechende Sekundärdichtungsnut (112b) aufweist, welche mit einer Sekundärdichtung (15) ausgestattet ist, welche derart angeordnet sind, dass sie in abdichtender Weise gegen die Peripherie des Rohrs (2) anliegt, und
- wobei die besagte Endfläche (111c) eine zweite Sekundärdichtungsnut (112c) aufweist, welche die Primärdichtungsnut (111b) der Endfläche (111c) umschliesst und eine Sekundärdichtung (15) aufweist, welche in abdichtender Weise gegen die besagte Dichtungsfläche (52) anliegt.

3. Rohrverbindung (1, 1a) gemäss Anspruch 1 oder 2, wobei die Primärdichtung (14) eine Metalldichtung ist.

4. Rohrverbindung (1, 1a) gemäss Anspruch 1 oder 2, wobei die Sekundärdichtung (15) eine Elastomerdichtung ist.

5. Rohrverbindung (1, 1a) gemäss Anspruch 1 oder 2, wobei die Sekundärdichtung (15) eine Elastomerdichtung ist, welche mindestens einen Stützring (151) aufweist.

6. Rohrverbindung (1, 1a) gemäss Anspruch 1 oder 2, wobei die (erste) Mutter (12) mindestens eine radiale Durchgangsbohrung (124) aufweist, welche angeordnet ist zur Aufnahme einer Feststellschraube (16) zum Arretieren der Mutter (12) bezüglich des korrespondierenden Aussengewindeabschnittes (132, 531).

7. Verfahren zur abdichtenden Verbindung eines ersten und zweiten Rohres (2, 3) oder eines maschinell bearbeiteten Blocks (5) und eines Rohrs (2) mittels einer Rohrverbindung (11a) gemäss Anspruch 1 oder 2, wobei das Verfahren die folgenden Schritte beinhaltet:
- Platzieren der Dichtungs- und Rohrträgereinheit (11, 11a) mit den zugehörigen Primär- und Sekundärdichtungen (14, 15) zwischen den Rohrendflächen (23, 33) der benachbarten Rohre (2, 3) oder zwischen die Rohrendfläche (23) des Rohrs (2) und die Dichtungsfläche (52), welche den Anschluss (51) des benachbarten Blocks (5) umschliesst;
- Verbinden der ersten Mutter (12) mit dem korrespondierenden Aussengewindeabschnitt (132, 531) in der Rohrverbindung (1, 1a);
- Zusammenziehen der Rohrverbindung (1, 1a) mittels der ersten Mutter (12), um dadurch die besagten Dichtungen (14, 15) in eine abdichtende Anlage gegen die Rohrendflächen (23, 33) der Rohre (2, 3) zu bringen, oder gegen die Rohrendfläche (23) des Rohrs (2) und die Dichtungsfläche (52).

8. Verfahren nach Anspruch 7, wobei das Verfahren zusätzlich den folgenden weiteren Schritt aufweist:
- Arretieren der Mutter (12) am korrespondierenden Aussengewindeabschnitt (132, 531) mit mindestens einer Feststellschraube (16), welche in einer radialen Durchgangsbohrung in der Mutter (12) angeordnet ist.

## Revendications

1. Un raccord de tuyau (1) pour raccorder de manière étanche des premier et second tuyaux qui, à leurs parties d'extrémité opposées (21, 31), sont pourvus d'anneaux amovibles (4) agencés dans des rainures (22, 32) prévues dans les périphéries des tuyaux (2, 3), le raccordement de tuyau (1) étant pourvu
d'un premier écrou (12) qui est pourvu d'une partie ayant un filetage intérieur (122), est agencé pour encercler la partie d'extrémité (21) du premier tuyau (2) et est pourvu d'une partie d'épaulement (121) qui peut venir en butée de manière axialement supportante contre ladite bague (4),
d'un deuxième écrou (13) qui est pourvu d'une partie ayant un filetage extérieur (132), est agencé pour encercler le partie d'extrémité (31) du deuxième tuyau (3) et est pourvu d'une partie d'épaulement (131) qui peut venir en butée de manière axialement supportante contre ladite bague (4), et
une unité de support de tuyau et de joint (11) entourée par les écrous (12, 13),
les écrous (12, 13) étant en engagement fileté les uns avec les autres et étant agencés pour presser les faces radiales d'extrémité de tuyau (23, 33) des tuyaux (2, 3) contre une partie de support axial (111) de l'unité de support de tuyau et de joint (11),
dans lequel
la partie de support axial (111) est pourvue de faces de butée parallèles (111a) faisant saillie radialement vers l'intérieur, qui sont chacune pourvues d'une rainure de joint primaire (111b) pourvue d'un joint primaire (14) agencé pour venir en appui étanche contre lesdites faces d'extrémité de tuyau (23, 33), et,
s'étendant axialement dans les deux directions à partir de la partie de support axial (111), des portions de support radial en forme de manchon (112, 112a) existent, qui sont pourvues, à l'intérieur, de rainures de joint secondaire respectives (112b) pourvues de joints secondaires (15) agencés pour venir en butée de manière étanche contre les périphéries des tuyaux.

2. Un raccord de tuyau (1 a) pour raccorder de manière étanche un bloc usiné (5) et un tuyau (2) qui, à sa partie d'extrémité (21), est pourvu d'un anneau amovible (4) agencé dans une rainures (22) prévue dans la périphérie du tuyau (2), le raccordement de tuyau (1a) étant pourvu
d'un écrou (12) qui est pourvu d'une partie ayant un filetage intérieur (122), est agencé pour encercler la partie d'extrémité (21) du tuyau (2) et est pourvu d'une partie d'épaulement (121) qui peut venir en butée de manière axialement supportante contre ladite bague (4),
d'un prise de raccordement (53) qui est configurée pour être fixée au dit bloc (5) sur une surface de joint (52) encerclant une ouverture (51) du dit bloc (5), la prise de raccordement (53) étant pourvue d'une partie ayant un filetage extérieur (531) et est agencé pour encercler la partie d'extrémité (21) du tuyau (2) et l'unité de support de tuyau et de joint (11a),
l'écrou (2) et la prise de raccordement (53) étant en engagement fileté l'un avec l'autre et entourant l'unité de support de tuyau et de joint (11a) et étant agencés pour presser une face radiale d'extrémité de tuyau (23) du tuyau (2) contre une partie de support axial (111) de l'unité de support de tuyau et de joint (11a) et une face d'extrémité (111c) de l'unité de support de tuyau et de joint (11 a) contre ladite face de joint (52),
la partie de support axial (111) est pourvue d'une face de butée (111a) faisant saillie radialement vers l'intérieur et étant parallèle à ladite face d'extrémité (111c), et chacune de la face d'extrémité (111c) et la face de butée (111a) étant pourvues d'une rainure de joint primaire (111b) pourvue d'un joint primaire (14) agencé pour venir en butée étanche contre ladite face d'extrémité de tuyau (23, 33) et contre ladite face de joint (52), respectivement, et
s'étendant axialement à partir de la partie de support axial (111), une portion de support radial en forme de manchon (112) existe, qui est pourvue, à l'intérieur, d'une première rainure de joint secondaire (112b) pourvue d'un joint secondaire (15) agencé pour venir en butée de manière étanche contre la périphérie du tuyau (2), et
ladite face d'extrémité (111c) est pourvue d'une seconde rainure de joint secondaire (112c) encerclant la rainure de joint primaire (111b) de la face d'extrémité (111c) et étant pourvue d'un joint secondaire (15) agencé pour venir en butée de manière étanche contre la dite face de joint (52).

3. Le raccord de tuyau (1, 1a) selon la revendication 1 ou 2, dans lequel le joint primaire (14) est un joint métallique.

4. Le raccord de tuyau (1, 1a) selon la revendication 1 ou 2, dans lequel le joint secondaire (15) est un joint élastomère.

5. Le raccord de tuyau (1, 1a) selon la revendication 1 ou 2, dans lequel le joint secondaire (15) est un joint élastomère pourvu d'au moins une bague de support (151).

6. Le raccord de tuyau (1, 1a) selon la revendication 1 ou 2, dans lequel le (premier) écrou (12) est pourvu d'au moins un alésage radial fileté (124) agencé pour recevoir une vis de réglage (16) pour bloquer l'écrou (12) par rapport à la partie filetée à l'extérieur correspondante (132, 531).

7. Un procédé de raccordement étanche d'un premier et second tuyaux (2, 3) ou d'un bloc usiné (5) et d'un tuyau (2) au moyen d'un raccord de tuyau (1, 1a) selon la revendication 1 ou 2, dans lequel le procédé comprend les étapes suivantes:
- placer une unité de support de tuyau et de joint (11, 11a) avec les joints primaires et secondaires associés entre les faces d'extrémité de tuyau (23, 33) de tuyaux adjacents (2, 3), ou entre la face d'extrémité de tuyau (23) du tuyau (2) et la face de joint (52) encerclant l'ouverture (51) du bloc adjacent (5);
- connecter le premier écrou (12) à la partie filetée à l'extérieur correspondante (132, 531) dans le raccord de tuyau (1, 1a);
- tirer le raccord de tuyau (1, 1a) ensemble au moyen du premier écrou (12) afin d'amener ainsi lesdits joints (14, 15) en butée étanche contre les faces d'extrémité des tuyaux (23, 33) des tuyaux (2, 3), ou contre la face d'extrémité de tuyau (23) du tuyau (2) et la face de joint (52).

8. Le procédé selon la revendication 7, dans lequel le procédé comprend en outre l'étape de:
- verrouiller l'écrou (12) à la partie filetée à l'extérieur (132, 531) correspondante avec au moins une vis de réglage (16) qui est agencée dans un alésage radial fileté dans l'écrou (12).
